Europäisches Patentamt

European Patent Office

Office européen des brevets

(19)

(11) Veröffentlichungsnummer: **0 149 972**
**B1**

(12) **EUROPÄISCHE PATENTSCHRIFT**

(45) Veröffentlichungstag der Patentschrift:
05.08.87

(51) Int. Cl.⁴: **B 01 D 3/08, B 01 L 9/04**

(21) Anmeldenummer: **84810581.3**

(22) Anmeldetag: **29.11.84**

(54) **Höhenverstellbares Stativ für Rotationsverdampfer.**

(30) Priorität: **09.12.83 CH 6597/83**

(43) Veröffentlichungstag der Anmeldung:
**31.07.85 Patentblatt 85/31**

(45) Bekanntmachung des Hinweises auf die Patenterteilung:
**05.08.87 Patentblatt 87/32**

(84) Benannte Vertragsstaaten:
**CH DE FR GB IT LI SE**

(56) Entgegenhaltungen:
**DE - A - 2 649 950**
**DE - A - 2 758 433**
**GB - A - 2 129 321**
**JP - U - 57 145 501**

**TECHNISCHE INFORMATIONEN, Nr. 5, 1982, QVF**
**Glastechnik GmbH, Wiesbaden, DE;**
**"Rotationsverdampfer Rotadest R 10"**

(73) Patentinhaber: **Büchi Laboratoriums-Technik AG,**
**Meierseggstrasse 40, CH-9230 Flawil (CH)**

(72) Erfinder: **Zellweger, Adolf, Bergweidstrasse 3,**
**CH-9202 Gossau (CH)**

(74) Vertreter: **Wenger, René et al, Hepp & Partner AG**
**Marktgasse 18, CH-9500 Wil (CH)**

ACTORUM AG

## Beschreibung

Die Erfindung bezieht sich auf ein höhenverstellbares Stativ gemäss dem Oberbegriff von Patentanspruch 1. Mit derartigen Stativen, auch Schnellhebevorrichtungen genannt, kann beispielsweise ein Verdampferkolben in einem Wasserbad gehalten werden. Da der Verdampfungsvorgang nur durch rasches Herausheben des Kolbens aus dem Heizbad gestoppt werden kann, ist ein müheloses und rasches Verstellen des Stativs erwünscht. Das Stativ muss ausserdem in der Lage sein, verschiedene Schwenkbewegungen ausführen zu können, um einerseits die Einstellung des Stativs den jeweiligen Dimensionen des Glassatzes anpassen zu können und um andererseits das Hantieren mit dem Glassatz und den darin enthaltenen Chemikalien zu erleichtern. Neben einer robusten Bauweise wäre es schliesslich auch erwünscht, dass die Hebe- und Senkbewegungen des Stativs motorisch ausgeführt werden können, da dies eine automatische Steuerung des Verdampfungsvorganges über eine Zeitschaltung ermöglicht.

Motorischer Antrieb der Stativbewegung bei gleichzeitiger Möglichkeit des Handbetriebes stellen jedoch teilweise widersprüchliche Anforderungen, welche bei bisher bekannten Stativen nicht befriedigend gelöst worden sind. So erlauben beispielsweise die meisten Stative ausschliesslich einen Handbetrieb, wobei in der Regel eine Höhenverstellung der Haltevorrichtung nicht mit einer Hand ausgeführt werden kann, da entweder der an der Haltevorrichtung befestigte Glassatz zu schwer ist oder mit einer Hand die Haltevorrichtung gehalten werden muss, während mit der anderen eine Feststellschraube oder dergleichen gelöst wird. Auch dem unterschiedlichen Gewicht der an der Haltevorrichtung einspannbaren Glassätze tragen die bisher bekannten Stative keine Rechnung. Durch die japanische Gebrauchsmuster Publikation 145501/1982 ist beispielsweise ein motorisch höhenverstellbares Stativ bekannt geworden, bei dem ein Elektromotor eine im Innern der Stativstange angeordnete Gewindespindel dreht. Die Stativstange selbst ist mit einer Längsführung gegen Drehbewegung gesichert, so dass beim Drehen der Gewindespindel je nach Drehrichtung die Stativstang gehoben oder gesenkt wird. Der Nachteil dieser Vorrichtung besteht jedoch darin, dass ein Handbetrieb überhaupt nicht möglich ist. Ist beispielsweise bei einem Siedeverzug im Verdampferkolben ein sofortiges Unterbrechen der Wärmezufuhr erforderlich, so muss die Stativstange motorisch angehoben werden, was jedoch mittels der Gewindespindel viel zu lange dauert, so dass Explosionsgefahr besteht. Ein weiterer Nachteil besteht darin, dass beispielsweise bei einem Stromausfall die Haltevorrichtung überhaupt nicht mehr bewegt werden kann und der Verdampferkolben z.B. bei einem Automatikbetrieb im Heizbad eingetaucht bleibt, welches sich jedoch nur sehr langsam abkühlt.

Durch die DE-A-26 49 950 ist ein Hebestativ für ausschliesslich manuelle Betätigung bekannt geworden, bei dem das Anheben der Haltevorrichtung mit Hilfe eines in der Stativstange untergebrachten Gasdruckzylinders erleichtert wird. Die Arretierung an der Stativstange erfolgt jeweils mit einer Stellschraube, die mit Hilfe eines Haltegriffs festlegbar ist. Bei entsprechender Auslegung des Gasdruckzylinders kann nach dem Lösen der Arretierung zwar ein relativ rasches und müheloses Anheben der Haltevorrichtung erfolgen. Der in der Stativstange untergebrachte Gasdruckzylinder ist jedoch schwer zugänglich und lässt sich nicht justieren. Eine Anpassung an verschiedene durch das Stativ zu tragende Gewichte ist daher nicht möglich. Ausserdem besteht auch keine Möglichkeit, eine Antriebsvorrichtung für automatischen Betrieb auf geeignete Weise anzuschliessen.

Es ist daher eine Aufgabe der Erfindung, ein Stativ der eingangs genannten Art zu schaffen, welches nicht nur schnell und leicht zu handhaben ist, sondern bei dem auch die unterschiedlichen Gewichte der am Stativ zu befestigenden Glassätze berücksichtigt werden können. Ausserdem soll eine vollautomatische Steuerung der Stativbewegungen ermöglicht werden, ohne dass dabei die Funktionen des Handbetriebs beeinträchtigt werden. Schliesslich soll das Stativ auch in Notfallsituationen eine maximale Betriebssicherheit aufweisen.

Diese Aufgaben werden erfindungsgemäss mit einem Stativ gelöst, welches die Merkmale im Kennzeichen von Anspruch 1 aufweist. Die Anordnung des Energiespeichers neben der Stativstange, dessen Ausbildung als Federvorrichtung und die Verbindung mit der Haltevorrichtung über einen Seilzug ergibt zahlreiche Vorteile. Federvorrichtungen sind bekanntlich für derartige Zwecke ausgezeichnete Energiespeicher, welche ohne Betriebsstörungen zuverlässig arbeiten und welche relativ platzsparend eingebaut werden können. Die Anordnung der Federvorrichtung neben der Stativstange ermöglicht einerseits eine vorteilhafte konstruktive Ausgestaltung der Stativstange und der Haltevorrichtung, wie z.B. eine niedrige Bauhöhe. Andererseits ermöglicht diese Anordnung aber auch einen leichten Zugang für Eingriffe in die versichedenen Bewegungsabläufe. So kann z.B. eine Antriebsvorrichtung am Energiespeicher angeordnet werden, welche unmittelbar in dessen Kräftepotential eingreift, wie nachstehend noch aufgezeigt wird. Der Seilzug ist platzsparend, kostengünstig und lässt sich daher von aussen unsichtbar auf einfachste Weise unterbringen. Eine Änderung der Kraftrichtung ist über Umlenkrollen auf einfachste Weise möglich, wobei nur geringe Reibungsverluste in Kauf genommen werden müssen.

Besonders vorteilhaft weist die Federvorrichtung zum Justieren der speicherbaren potentiellen Energie eine Justiervorrichtung auf. Dadurch kann die für das Anheben der Haltevorrichtung aufzubringende Kraft dem jeweiligen Gewicht des Glassatzes angepasst werden, so dass die Haltevorrichtung beim Lösen der Arretierung immer etwa mit dem gleichen Kraftaufwand angehoben wird. Die Justiervorrichtung ermöglicht es selbstverständlich auch, zwischen dem Gewicht des Glassatzes und der Kraft aus dem Energiespeicher einen Gleichgewichtszustand herzustellen.

Die Konstruktion kann noch dadurch verbessert werden, dass die Federvorrichtung kraftschlüssig mit einer Seiltrommel zum Aufwickeln des Seilzuges verbunden ist. An sich könnte die Seilbewegung auch durch einen genügend grossen Hebelarm aufgenommen werden. Die Seiltrommel hat jedoch den Vorteil, dass sie weniger Platz benötigt und dass an ihr weitere Hilfsmittel wie Bremsen, Sperrklinken, Verzahnungen usw. angeordnet werden können.

Je nach dem gewünschten Kräftepotential und dem Weg, den die Haltevorrichtung an der Stativstange zurücklegen muss, kann die Federvorrichtung entweder eine Spiralfeder oder eine zylindrische Schraubenfeder mit Schenkeln (Schenkelfeder) sein. Bei beiden Federtypen lässt sich die Kraft auf einfachste Weise auf eine Achse übertragen. Federn mit geeigneter Federcharakteristik sind bereits im Handel erhältlich und müssen nur noch auf geeignete Weise eingebaut werden. Selbstverständlich wären jedoch je nach Anwendungsfall auch andere Federvorrichtungen denkbar, wie z.B. gerade Biegefedern, Drehfedern, Tellerfedern usw.

Auf besonders einfache Weise lässt sich die Federvorrichtung justieren, wenn die Federvorrichtung in einem Gehäuse angeordnet ist, welches an einem Ende eine Verzahnung aufweist, und wenn die Justiervorrichtung ein mit einer korrespondierenden Verzahnung versehener Federteller ist, welcher mittels einer Stellvorrichtung zum Justieren der Schraubenfeder in verschiedenen Positionen auf die Verzahnung am Gehäuse anpressbar ist. Mit Hilfe des Federtellers kann ersichtlicherweise die Federvorrichtung vorgespannt werden, wobei das Gewicht des an der Haltevorrichtung befestigten Glassatzes berücksichtigt werden kann. Am Gehäuse bzw. am Federteller kann eine Skala angebracht werden, welche das Justieren der Federvorrichtung erleichtert und welche anzeigt, wie stark die Federvorrichtung vorgespannt ist.

Wenn die Seiltrommel mit einer auskuppelbaren Antriebsvorrichtung zum motorischen Verschieben der Haltevorrichtung bei gelöster Arretierung verbunden ist, kann das erfindungsgemässe Stativ auf einfachste Weise sowohl manuell als auch automatisch betrieben werden. Bei eingekuppelter Antriebsvorrichtung führt diese an der Seiltrommel die gleiche Bewegung aus, welche auch bei Handbetrieb erfolgt. Dabei wird die Antriebsvorrichtung beim Anheben der Haltevorrichtung durch die Federvorrichtung entlastet. Auf besonders einfache Weise kann unmittelbar an der Seiltrommel eine Verzahnung vorgesehen sein, in welche die Antriebsvorrichtung bzw. deren Getriebe kraftschlüssig eingreift. Selbstverstänlich wäre jedoch auch eine reibschlüssige Kraftübertragung mittels Reibrädern oder Riemen denkbar.

Eine besonders vorteilhafte Lagerung und Fixierung der Haltevorrichtung an der Stativstange ergibt sich, wenn zum Arretieren der Haltevorrichtung eine Zahnstange parallel neben der Stativstange angeordnet ist, und wenn die Haltevorrichtung eine in die Zahnstange einrastbare Sperrklinke aufweist. Auf diese Weise sind Lagerung und Arretierung der Haltevorrichtung voneinander getrennt, so dass die Lagerung an einer präzisen, zylindrisch geschliffenen Stativstange mittels Kugelbüchsen erfolgen kann. Dies ergibt besonders vorteilhafte Laufeigenschaften, während die Zahnstange mit der einrastbaren Sperrklinke eine sichere Arretierung gewährleistet. Je nach der Zähnezahl der Zahnstange wird damit eine genügend feine Einstellbarkeit gewährleistet.

Die Lagerung kann noch dadurch verbessert werden, dass als Verdrehsicherung parallel neben der Stativstange ein Führungsprofil angeordnet ist, an welchem sich die Haltevorrichtung gegen Drehmomente um die Achse der Stativstange abstützt. Gegenüber einer Verdrehsicherung durch Längsführung an der Stativstange selbst hat diese Anordnung den Vorteil, dass die bei Drehmomenten auftretende Reibung an der Führung durch den zwischen Stativstange und Führungsstange entstehenden Hebelarm reduziert werden kann.

Auf besonders einfache Weise können die Führungs- bzw. Arretierungselemente gegen äussere Einflüsse und Verschmutzung geschützt werden, wenn die Haltevorrichtung einen Mantel aufweist, welcher Stativstange, Zahnstange und Führungsprofil umschliesst, und wenn an der Unterkante des Mantels ein mit der Grundplatte verbundener Faltenbalg angeordnet ist. Der Faltenbalg überbrückt die Relativbewegung zwischen Mantel und Grundplatte und verhindert zudem, dass in diesen Bereich Gegenstände gelangen können, welche die Haltevorrichtung beim Absenken blockieren würden.

Der Mantel hat zudem den Vorteil, dass er den in der Ebene der Grundplatte herangeführten Seilzug unsichtbar aufnehmen kann und diesen gegen mechanische und chemische Einflüsse von aussen schützt.

Wenn die Sperrklinke an der Haltevorrichtung mit einer Schaltvorrichtung verbunden ist, welche die Antriebsvorrichtung an der Seiltrommel bei eingerasteter Klinke ausschaltet, wird zuverlässig vermieden, dass bei Handbetrieb versehentlich die Antriebsvorrichtung betätigt werden kann. Wenn die Sperrklinke mit einem an einem Handgriff befestigten Entriegelungshebel ausrastbar ist und wenn der Entriegelungshebel mit einer Klappe feststellbar ist, welche beim Anfassen des Entriegelungshebels ausschwenkt und welche derart mit einer Schaltvorrichtung verbunden ist, dass bei ausgeschwenkter Klappe die Antriebsvorrichtung ausgekuppelt ist, kann vom Bedienungspersonal ohne weitere Massnahmen unmittelbar in den Automatikbetrieb eingegriffen werden. Dies ist besonders vorteilhaft, wenn beispielsweise in einem Notfall aus dem Automatikbetrieb der Verdampferkolben sofort aus dem Bad gehoben werden muss. Dies ist mittels der Schaltvorrichtung an der Klappe möglich, ohne dass vor dem Anheben die Antriebsvorrichtung separat abgeschaltet oder ausgekuppelt werden muss.

Ebenfalls bei Notfallsituationen ist es besonders vorteilhaft, wenn die Antriebsvorrichtung an der Seiltrommel ein Elektromotor ist, welcher mit der Seiltrommel derart gekuppelt ist, dass bei Stromausfall die Seiltrommel frei drehbar ist. Schaltet bei Automatikbetrieb jemand versehentlich den Strom ab oder erfolgt z.B. bei Abwesenheit des Bedienungspersonals ein Stromunterbruch, so kann sich die Seiltrommel frei drehen, da die Arretierung ausgeklinkt ist. Durch entsprechende Einstellung an der Federvorrichtung kann dadurch erreicht werden, dass der Verdampferkolben in einer derartigen Situation immer aus dem Heizbad herausgehoben wird. Als geeignete Kupplung könnte beispielsweise eine elektromagnetische Kupplung eingesetzt werden.

Die Betriebssicherheit und Steuerbarkeit des Stativs kann weiter dadurch verbessert werden, dass zwischen Mantel und Grundplatte ein justierbarer Positionsschalter angordnet ist, der beim Erreichen einer unteren und/oder oberen Endlage des Mantels bzw. der Haltevorrichtung die Antriebsvorrichtung an der Seiltrommel wahlweise ausschaltet oder deren Drehrichtung umkehrt. Auf diese Weise können die Endlagen besonders einfach eingestellt werden. Andererseits ist bei Automatikbetrieb auch ein dauerndes Auf- und Abpendeln der Haltevorrichtung möglich, was in bestimmten Fällen wünschbar sein kann.

Wenn die Haltevorrichtung um eine quer zur Stativstange verlaufende Achse verschwenkbar ist, können auch kleine Glaskolben ausreichend tief in das Wasserbad eingetaucht werden. Auch wenn das Stativ für andere Zwecke als für Rotationsverdampfer eingesetzt wird, ist eine vielseitige Verstellbarkeit wünschenswert.

Ein Ausführungsbeispiel der Erfindung ist in den Zeichnugnen dargestellt und wird nachstehend genauer beschrieben. Es zeigen:

Figur 1 eine Seitenansicht der erfindungsgemässen Vorrichtung mit an der Haltevorrichtung befestigtem Glassatz und mit Heizbad,

Figur 2 eine Draufsicht auf die Vorrichtung gemäss Figur 1 in stark vereinfachter Darstellungsweise mit nur teilweise dargestellter Haltevorrichtung und ohne Glassatz,

Figur 3 einen Querschnitt durch die Haltevorrichtung in der Ebene A-A bei Figur 1,

Figur 4 einen Längsschnitt durch die gesamte Hebevorrichtung in der Ebene B-B bei Figur 3,

Figur 5 einen Längsschnitt durch die Hebevorrichtung in der Ebene C-C bei Figur 3,

Figur 5a die Schaltvorrichtung an der Sperrklinke,

Figur 6 einen weiteren Querschnitt durch die Haltevorrichtung mit Stativstange und Führungsstange in der Ebene D-D bei Figur 1,

Figur 7 einen Längsschnitt durch den Positionsschalter in der Ebene E-E bei Figur 6, und

Figur 8 einen Längsschnitt durch die Federvorrichtung mit der Seiltrommel in der Ebene F-F bei Figur 2.

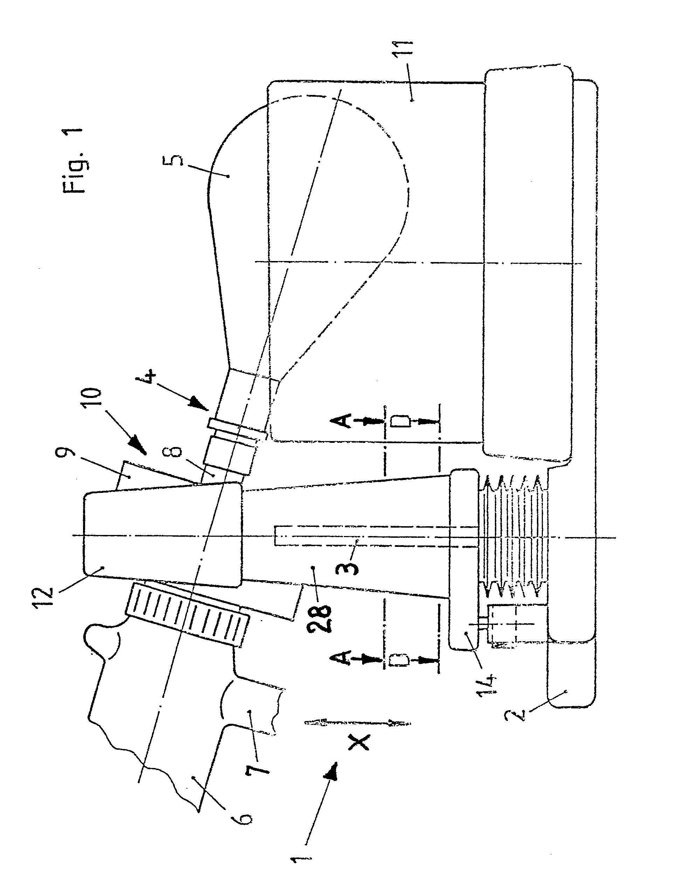

Wie in Figur 1 schematisch stark vereinfacht dargestellt, besteht das Stativ 1 aus einer Grundplatte 2, auf der eine Stativstange 3 angeordnet ist, die im vorliegenden Ausführungsbeispiel nicht sichtbar, sondern von einem Mantel 28 verdeckt ist. An einer in Pfeilrichtung X entlang der Stativstange 3 heb- und senkbaren Haltevorrichtung 10 sind ein Glassatz 4 und ein Antriebsaggregat 9 befestigt. Der Glassatz besteht aus einem Kolben 5, der über ein Dampfdurchführngsrohr 8 mit einem nur teilweise dargestellten Kühler 6 verbunden ist. Am Destillatauslauf 7 des Kühlers ist in der Regel der Destillatsammelkolben befestigt, der jedoch hier nicht dargestellt ist. Das Antriebsaggregat 9 setzt den Glassatz 4 in bekannter Weise in eine Rotationsbewegung. Antriebsaggregat 9 und Glassatz 4 sind an sich bekannter Bauteile und werden daher hier nicht näher beschrieben und in den übrigen Zeichnungen nicht mehr dargestellt. Der Kolben 5 ist in ein Wasserbad 11 eingetaucht, das als separate Baugruppe auf die Grundplatte 2 gestellt werden kann.

Die Haltevorrichtung 10 weist einen Mantel 28 auf, welcher die Stativstange 3 umgibt. Eine Steuereinheit 12, welche in die Haltevorrichtung 10 integriert sein kann, überwacht die Funktion des Antriebsaggregates 9 für die Drehbewegung des Glassatzes.

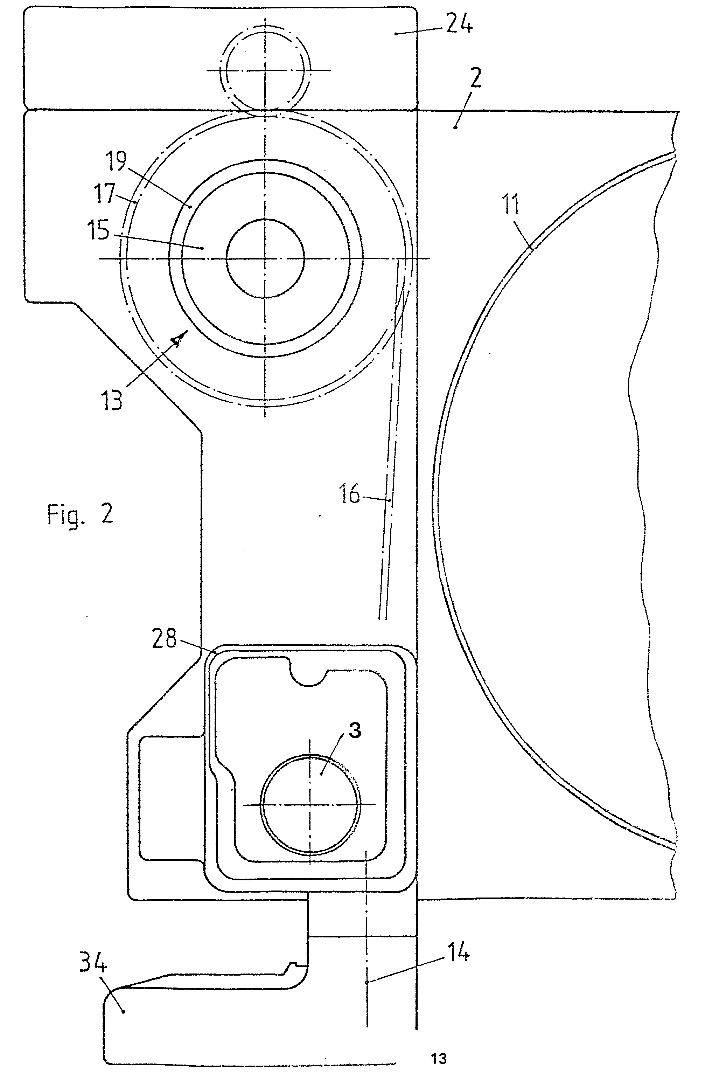

In Figur 2 erkennt man den neben der Stativstange 3 angeordneten Energiespeicher 13. Der Energiespeicher ist in einem Gehäuse 19 auf der Grundplatte 2 untergebracht. Nicht sichtbar unter der Grundplatte ist andeutungsweise die Seiltrommel 17 und der Seilzug 16 dargestellt, der den Energiespeicher 13 mit der Haltevorrichtung 10 bzw. mit dessen Mantel 28 verbindet. Unmittelbar hinter·dem Energiespeicher 13 schliesst sich als separates Bauteil eine Antriebsvorrichtung 24 an, welche für Automatikbetrieb des Stativs auf geeignete Weise an das Gehäuse 2 anschliessbar ist.

Die Arretierung 14 besteht aus einem Handgriff 34 und einer hier nicht sichtbaren Sperrklinke, welche anschliessend noch beschrieben wird.

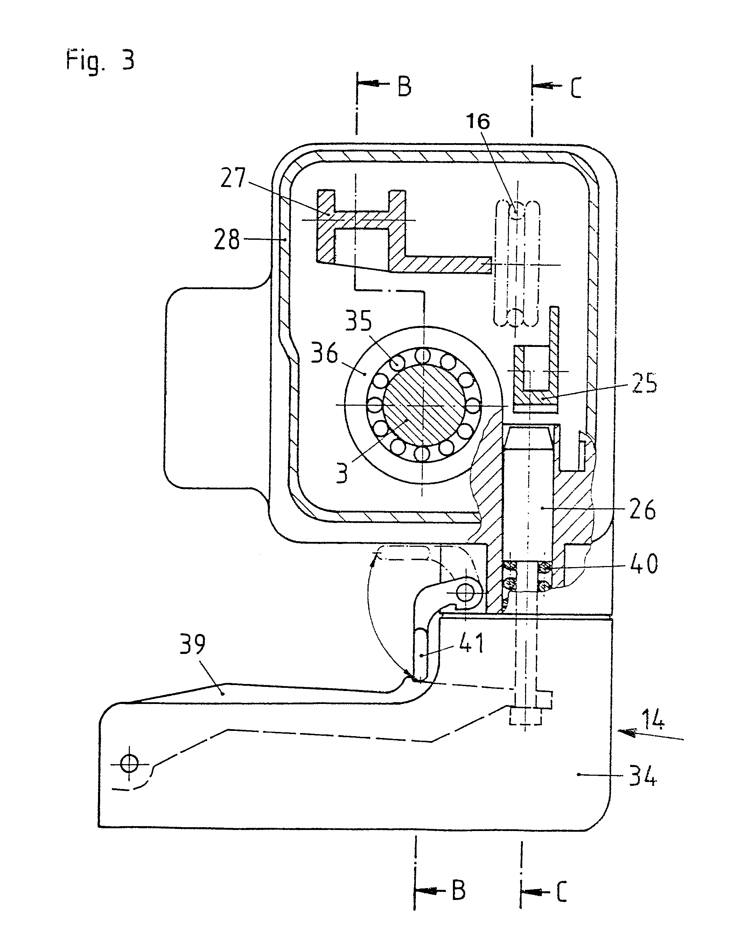

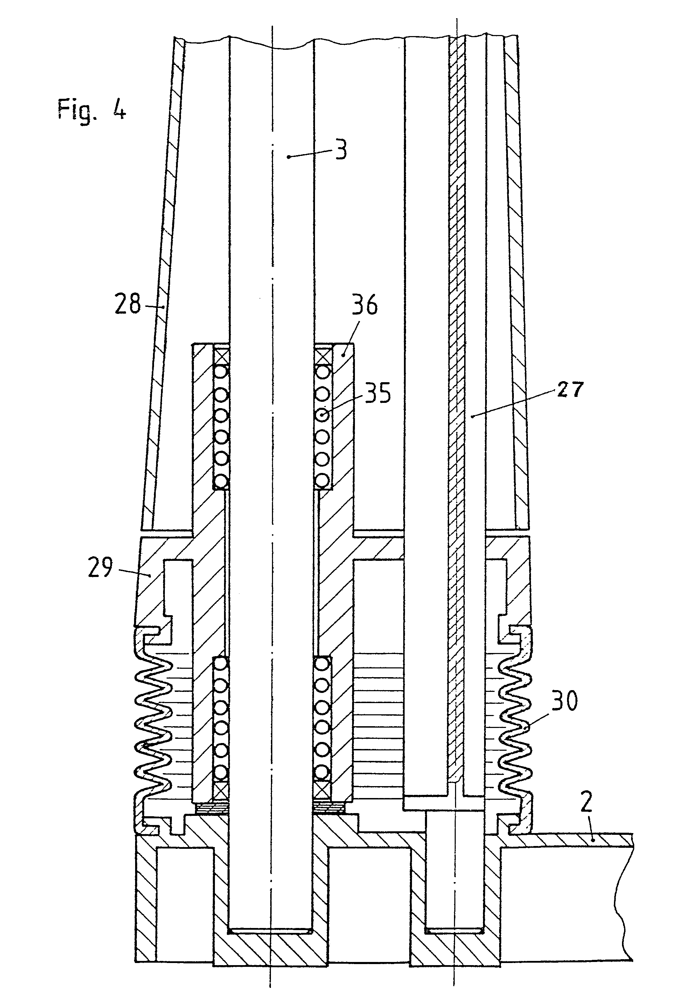

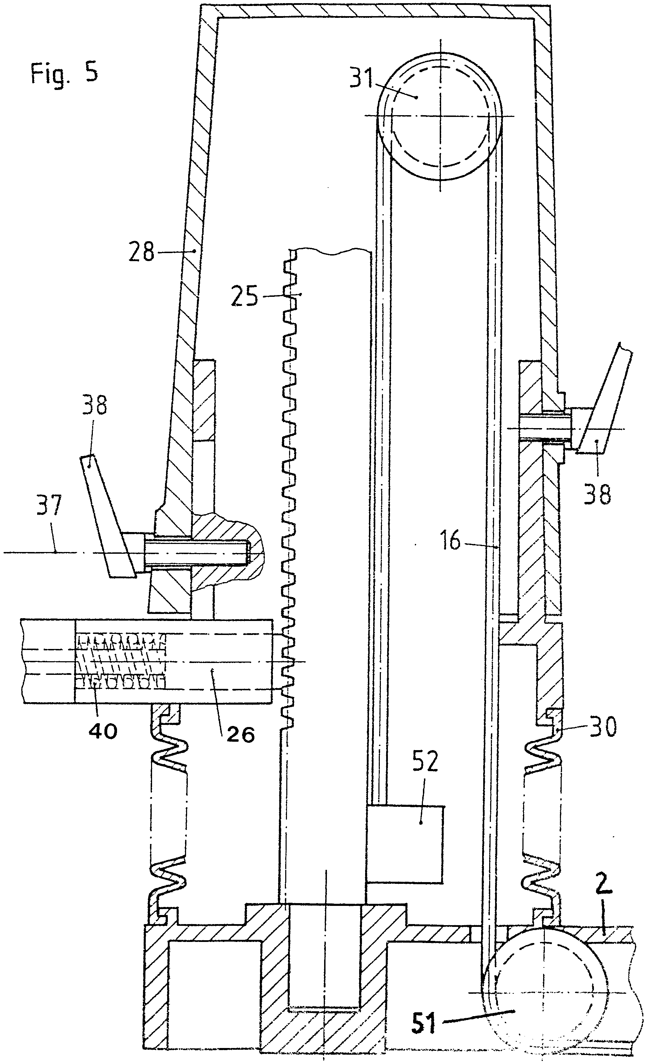

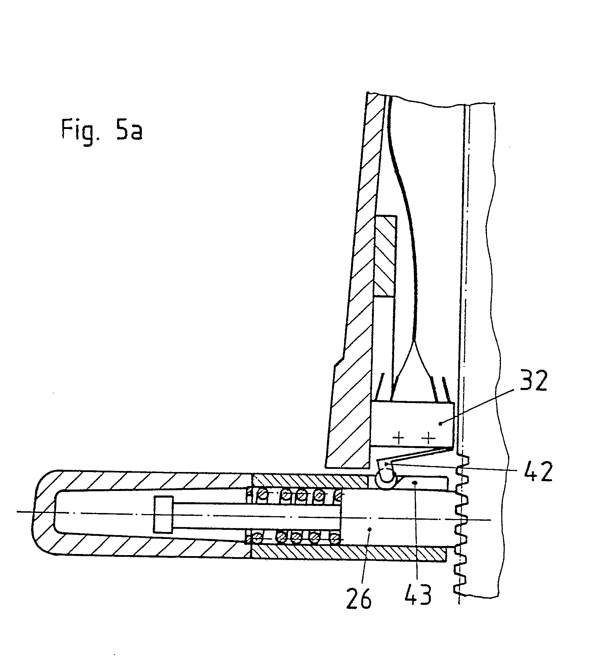

Nach dieser Gesamtübersicht der einzelnen Bauteile wird die genaue Funktionsweise und Konstruktion anschliessend aufgrund verschiedener Einzeldarstellungen erläutert. Wie insbesondere in den Figuren 3 und 4 dargestellt, ist die Stativstang 3 in vertikaler Lage an der Grundplatte 2 befestigt. Die Stativstange 3 ist von einem Futteral 36 umgeben, das einerseits den Mantel 28 trägt und andererseits Kugelbüchsen 35 aufnimmt, so dass das Futteral 36 zusammen mit dem Mantel 28 und der gesamten Haltevorrichtung mit möglichst geringer Reibung entlang der Stativstange 3 verschiebbar ist. Wie aus Figur 5 ersichtlich ist, ist der Mantel 28 nicht starr mit dem Futteral 36 verbunden, sondern um eine Kippachse 37 kippbar, so dass der ganze Mantel mit der Haltevorrichtung gegen das Wasserbad schräggestellt werden kann. Mit Arretierungshebeln 38 kann der Mantel 28 innerhalb eines bestimmten Sektors fixiert werden.

An der Unterkante 29 des Mantels ist ein Faltenbalg 30 angeordnet, der mit der Grundplatte 2 verbunden ist. Die Unterkante 29 des Mantels wird im Ausführungsbeispiel von einem vorspringenden Teil des Futterals 36 gebildet, da hier nur das Futteral 36 immer achsparallel zur Stativstange 3 verschoben wird. Der Faltenbalg 30 verschliesst ersichtlicherweise bei jeder Relativlage des Mantels 28 den Zwischenraum zwischen Unterkante 29 und Grundplatte 2.

Unmittelbar neben der Stativstange 3 ist parallel verlaufend eine Zahnstange 25 angeordnet. Mit dieser Zahnstange wirkt die Aretierung 14 zusammen, die aus einer Sperrklinke 26, einem Handgriff 34 und einem Entriegelungshebel 39 besteht. Eine Feder 40 presst die Sperrklinke 26 in die Zahnstange 25, so dass bei gelöstem Entriegelungshebel 39 die Haltevorrichtung arretiert ist. Zum Lösen der Arretierung muss der Entriegelungshebel 39 am Handgriff 34 betätigt werden, so dass gegen den Druck der Feder 40 die Sperrklinke 26 aus der Verzahnung der Zahnstange 25 gelöst wird. Der Entriegelungshebel 39 kann mit einer Klappe 41 seinerseits derart gesperrt werden, dass die Sperrklinke 26 ausser Eingriff mit der Zahnstange bleibt. Dies ist ersichtlicherweise Voraussetzung für einen motorischen Antrieb mit der Antriebsvorrichtung 24. Die Klappe 41 wird nur durch die Kraft der Feder 40 festgehalten. Wird der Entriegelungshebel 39 angefasst, schwenkt die Klappe 41 z.B. durch Federkraft aus und betätigt eine nicht dargestellte Schaltvorrichtung, welche die Antriebsvorrichtung 24 auskuppelt. Bei angefasstem Handgriff 34 ist somit die Antriebsvorrichtung immer ausgekuppelt und kann die Seiltrommel nicht bremsen.

Um zu verhindern, dass die Antriebsvorrichtung 24 bei eingerasteter Sperrklinke 26 betätigt werden kann, ist die Sperrklinke mit einer Schaltvorrichtung 32 versehen, welche in Figur 5a sichtbar ist. Die Schaltvorrichtung besteht aus einem Mikroschalter mit einem Schaltfühler 42, der bei eingerasteter Sperrklinke 26 den Kontakt unterbricht, so dass die Antriebsvorrichtung 24 nicht aktiviert werden kann. Beim Zurückziehen der Sperrklinke 26 läuft der Schaltfühler 42 auf einer Schaltnase 43 an der Sperrklinke auf und schliesst den Kontakt an der Schaltvorrichtung 32.

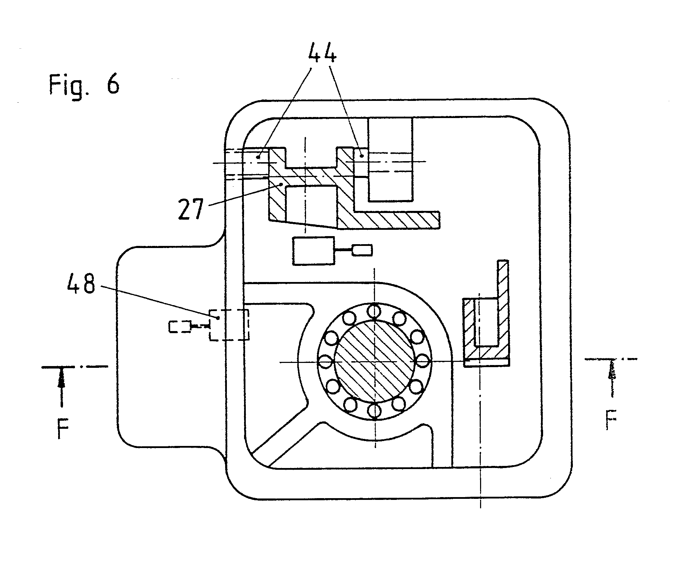

Um ein Verdrehen des Mantels 28 um die Mittelachse der Stativstange 3 zu verhindern, ist parallel neben der Stativstange ein Führungsprofil 27 angeordnet. Diese Art der Seitenführung ist wesentlich vorteilhafter als eine Führung an der Stativstange selbst. Einerseits würden bei einer Längsführung an der Stativstange selbst bedingt durch den kleinen Hebelarm relativ grosse Kräfte auftreten und andererseits wäre die Lagerung an der Stativstange erheblich schwieriger, da diese mit wenigstens einer Längsnut versehen sein müsste. Zwischen der Mittelachse des Führungsprofils 27 und derjenigen der Stativstange 3 entsteht ein relativ grosser Hebelarm, so dass Drehmomente nur noch geringe Kräfte an der Führungsstange ausüben können. Die Führung am Führungsprofil 27 erfolgt mittels einstellbarer Gleitbuchsen 44 aus Kunststoffmaterial, welche eine ebene Stirnseite aufweisen, so dass das Führungsprofil mit geringer Reibung berührt wird. Diese Gleitbuchsen sind in Figur 6 ersichtlich.

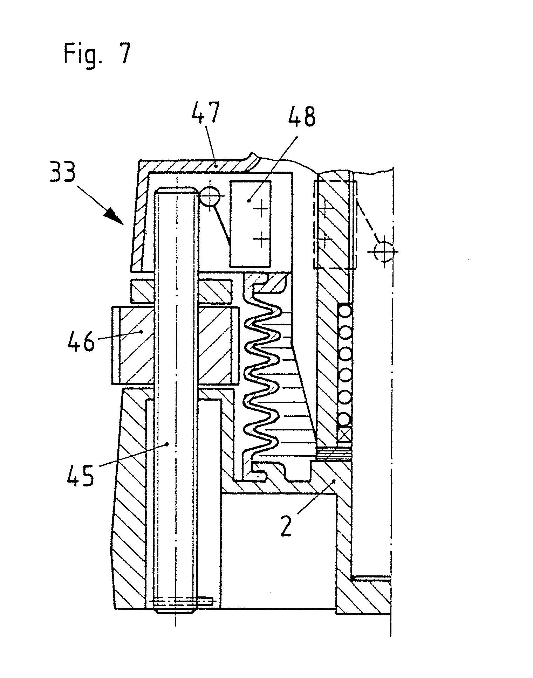

In den Figuren 6 und 7 ist ein justierbarer Positionsschalter 33 ersichtlich, mit dem die untere Endlage des Mantels begrenzt werden kann. Der Positionsschalter besteht aus einem Begrenzungsbolzen 45, dessen Relativlage zum Gehäuse 2 mit einem Stellrad 46 eingestellt werden kann. Bei Handbetrieb steht in der unteren Endlage des Mantels 28 ein Anschlag 47 am Begrenzungsbolzen 45 an. Wird das Stativ motorisch betätigt, so unterbricht ein Mikroschalter 48 beim Erreichen der unteren Endlage den Antrieb. Auf ähnliche Weise kann auch die obere Endlage mit einem Mikroschalter begrenzt werden, wobei es denkbar ist, beide Funktionen im Positionsschalter 33 zu vereinigen.

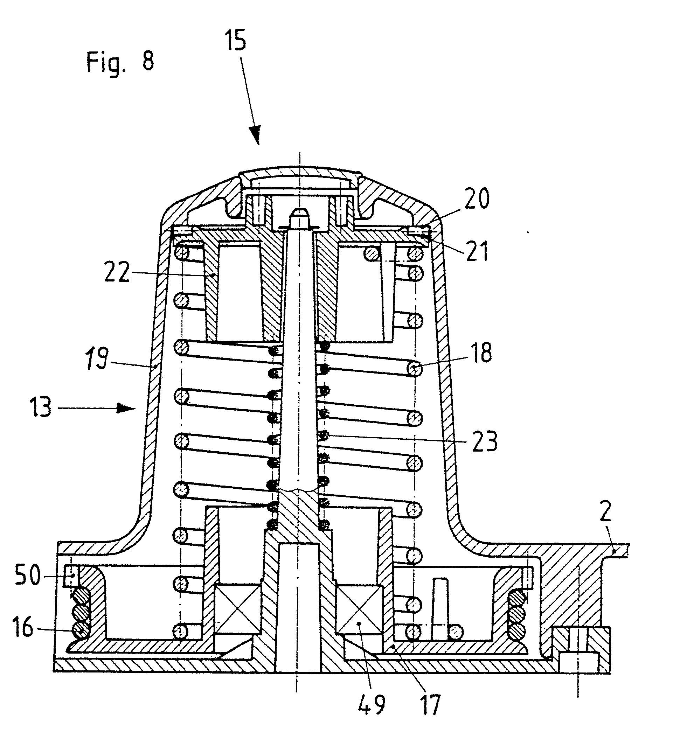

Die Funktion des Energiespeichers 13 wird anhand von Figur 8 erklärt. In einem oben geschlossenen, etwa zylindrischen Gehäuse 19 ist eine Schraubenfeder 18 untergebracht. Die Schraubenfeder 18 ist eine Schenkelfeder, wobei ein Schenkel an der Justiervorrichtung 15 fest eingespannt und der andere Schenkel mit der Seiltrommel 17 verbunden ist. Die Seiltrommel 17 ist mit einem Kugellager 49 in der Grundplatte 2 gelagert. Die Justiervorrichtung 15 zum Vorspannen der Schraubenfeder 18 besteht aus einem Federteller 22. Dieser Federteller 22 wird mit einer Stellvorrichtung 23 in Form einer Druckfeder gegen die Kerbverzahnung 20 auf der Innenseite des Gehäuses gepresst. Der Federteller hat seinerseits eine korrespondierende Kerbverzahnung 21. Bei gespannter Stellvorrichtung 23 kann sich der Federteller 22 somit relativ zum Gehäuse nicht verdrehen. Für das Vorspannen der Schraubenfeder 18 muss die Stellvorrichtung 23 soweit nach unten gedrückt werden, dass die beiden Verzahnungen 20 und 21 ausser Eingriff kommen. Anschliessend kann der Federteller 22 gedreht werden, so dass die Vorspannung der Schraubenfeder 18 verändert werden kann.

Die Wahl der geeigneten Schraubenfeder mit der gewünschten Federcharakteristik ist dem Fachmann bekannt und wird daher hier nicht näher beschrieben. Auf ähnliche Weise wie mit der Schraubenfeder könnte die Seiltrommel auch mit einer Spiralfeder verbunden sein. Die Federn müssen in jedem Fall derart dimensioniert sein, dass Federkraft und Federweg ausreichen, um den grössten an der Haltevorrichtung einspannbaren Glassatz aus der untersten Endlage in die oberste Endlage zu befördern. Ausserdem muss auch noch die Zeit berücksichtigt werden, in der diese Bewegung erfolgen muss.

Auf der Seiltrommel 17 ist der Seilzug 16 aufgewickelt. Je nach Umfang der Seiltrommel genügen schon zwei oder drei Windungen, um bei ganz angehobener Haltevorrichtung den Seilzug aufzuwickeln. Die Seiltrommel ist mit einem Zahnkranz 50 versehen, der mit einer Antriebsvorrichtung 24 bzw. mit dessen Getriebe zusammenwirkt, wie dies andeutungsweise in Figur 2 gezeigt ist.

Die Führung des Seilzuges 16 ist aus Figur 5 ersichtlich. Von aussen nicht sichtbar führt der Seilzug von der Seiltrommel im Innern der Grundplatte und in deren Ebene zuerst zu einer ersten Umlenkrolle 51 unterhalb des Mantels 28. Von dort führt der Seilzug innerhalb des Faltenbalges 30 und innerhalb des Mantels 28 nach oben zu einer zweiten Umlenkrolle 31, welche im oberen Bereich der Zahnstange 25 angeordnet ist. Von dieser zweiten Umlenkrolle 31 führt der Seilzug 16 wieder nach unten, wo er an einer Einspannstelle 52 am Futteral 36 befestigt ist. Der Seilzug 16 gewährleistet eine präzise und zuverlässige Kraftübertragung vom Energiespeicher 13 zur Haltevorrichtung 10. Da der Seilzug ein flexibles Gebilde ist, besteht ein zusätzlicher Vorteil noch darin, dass in einem Notfall auch bei eingekoppelter Antriebsvorrichtung 24 die Haltevorrichtung von Hand nach oben bewegt werden kann. Ausserdem wird dadurch auch die Unfallgefahr beim Senken der Haltevorrichtung ausgeschlossen, da in Senkrichtung nur das Eigengewicht der Haltevorrichtung wirkt.

Die Antriebsvorrichtung 24 ist vorzugsweise in einer Baugruppe untergebracht, welche mit wenigen Handgriffen an das Gehäuse 2 angeschlossen werden kann. Der Benutzer kann somit die Antriebsvorrichtung wahlweise an das Stativ anschliessen oder nicht. Ein Handbetrieb des Stativs ist auch bei angeschlossener Antriebsvorrichtung 24 möglich, indem die Position der Klappe 41 am Handgriff 34 mit einem Schalter abgetastet wird. Ist die Klappe eingerastet und die Sperrklinke 26 dauernd entriegelt, so kann automatisch eine Kupplung zwischen Antriebsvorrichtung 24 und Seiltrommel 17 betätigt werden. Wird der Handgriff 34 dagegen angefasst und der Entriegelungshebel 39 ganz nach innen an den Handgriff gedrückt, schwenkt die Klappe 41 durch Federkraft aus und betätigt einen Schalter, welcher die Antriebsvorrichtung 24 automatisch auskuppelt. Auf diese Weise kann jederzeit in den motorischen Betrieb des Stativs von Hand eingegriffen werden, ohne dass die Antriebsvorrichtung an der Seiltrommel den Handbetrieb blockiert. Die möglichen Schaltfunktionen sind in der nachstehenden Tabelle zusammengefasst:

|  | Handbetrieb | Motorbetrieb |
|---|---|---|
| Sperrklinke 26 | ausgerastet, Antriebsvorrichtung kann eingeschaltet werden | ausgerastet, Antriebsvorrichtung kann eingeschaltet werden |
| Entriegelungshebel 39 | betätigt, aber nicht arretiert | betätigt und mit Klappe arretiert |
| Klappe 41 | ausgeschwenkt | eingeschwenkt zum Arretieren des Entriegelungshebels |
| Antriebsvorrichtung 24 | ausgekuppelt | eingekuppelt |

Zum erfindungsgemässen Stativ gehört auch eine elektronische Steuervorrichtung mit verschiedenen Parametern, welche nicht nur den Stativhub, sondern auch noch die Rotationsbewegung des Antriebsaggregats und die Wärmezufuhr im Heizbad steuern kann. Damit können für vollautomatischen Betrieb ganze Verfahrensabläufe gesteuert werden, indem der Verdampfungskolben beispielsweise während einer bestimmten Zeit mit einer bestimmten Drehzahl im Heizbad mit einer bestimmten Temperatur eingetaucht ist und nach Ablauf dieser Zeitspanne automatisch aus dem Heizbad herausgehoben wird, wonach alle Antriebsvorrichtungen automatisch abgestellt werden.

Die Handhabung der Vorrichtung ist äusserst einfach und Fehlmanipulationen sind praktisch ausgeschlossen. Nach dem Einspannen des gefüllten Glassatzes 4 in die Haltevorrichtung 10 wird am Enegiespeicher 13 mit Hilfe der Justiervorrichtung 15 das erforderliche Kraftpotential eingestellt. Dabei wird vorteilhaft darauf geachtet, dass der Energiespeicher in der Lage ist, bei gelöster Arretierung 14 den Verdampferkolben 5 ganz aus dem Heizbad 11 herauszuheben. Anschliessend wird die Haltevorrichtung entweder von Hand oder motorisch abgesenkt, so dass der Verdampferkolben in das Heizbad eintaucht. Bei der Absenkbewegung wird der Seilzug 16 von der Seiltrommel 17 abgewickelt und die als Energiespeicher verwendete Federvorrichtung wird gespannt. Für den Handbetrieb muss der Handgriff 34 erfasst und der Entriegelungshebel 39 betätigt werden, so dass die Sperrklinke 26 ausser Eingriff mit der Zahnstange 25 kommt. In der gewünschten Position wird der Handgriff 34 losgelassen, so dass der Entriegelungshebel durch Federkraft an der Sperrklinke wieder in die Ruhestellung übergeht und die Sperrklinke einrastet. Für motorische Betätigung muss der Entriegelungshebel 39 mit Hilfe der Klappe 41 festgestellt werden, so dass die Sperrklinke ausgerastet bleibt, wenn der Handgriff 34 losgelassen wird. Die motorische Betätigung der Haltevorrichtung 10 erfolgt dann durch Drücken einer entsprechenden Taste an der in den Zeichnungen nicht dargestellten Steuervorrichtung, welche die Antriebsvorrichtung 24 ansteuert. Aus dem motorischen Betrieb kann jederzeit automatisch auf Handbetrieb umgestellt werden, indem der Handgriff 34 erfasst und der Entriegelungshebel wieder ganz an den Handgriff gepresst wird. Dadurch schwenkt die Klappe 41 automatisch aus, so dass die Antriebsvorrichtung 24 ausgekuppelt wird. Tritt bei Automatikbetrieb ein ungewollter Stromunterbruch ein, so wird die Antriebsvorrichtung ebenfalls ausgekuppelt, so dass die im Energiespeicher 13 gespeicherte potentielle Energie die Haltevorrichtung mit dem Verdampferkolben nach oben bewegt. Der Energiespeicher unterstützt auch beim Handbetrieb das Emporheben der Haltevorrichtung mit Glassatz und Antriebsaggregat. Das Absenken erfordert trotz dem gleichzeitigen Spannen der Federvorrichtung im Energiespeicher keinen grossen Kraftaufwand, da das Gewicht der Haltevorrichtung das Spannen der Federvorrichtung unterstützt.

## Patentansprüche

1. Höhenverstellbares Stativ, insbesondere für Rotationsverdampfer, mit einer Grundplatte (2) und mit einer entlang einer etwa vertikalen Stativstange (3) verschiebbaren und mittels einer Arretierung (14) an dieser feststellbaren Haltevorrichtung (10) zum Befestigen eines Glassatzes (4) und eines Antriebsaggregates oder dergleichen, wobei die Haltevorrichtung derart mit einem mechanischen Energiespeicher verbunden ist, dass sie bei gelöster Arretierung gegen die Kraft des Energiespeichers nach unten verschiebbar ist bzw. mit Unterstützung der Kraft des Energiespeichers anhebbar ist, dadurch gekennzeichnet, dass der Energiespeicher eine neben der Stativstange (3) angeordnete Federvorrichtung ist, welche über einen Seilzug (16) mit der Haltevorrichtung verbunden ist.

2. Stativ nach Anspruch 1, dadurch gekennzeichnet, dass die Federvorrichtung zum Justieren der speicherbaren potentiellen Energie eine Justiervorrichtung (15) aufweist.

3. Stativ nach Anspruch 1 oder 2, dadurch gekennzeichnet, dass die Federvorrichtung kraftschlüssig mit einer Seiltrommel (17) zum Aufwickeln des Seilzuges verbunden ist.

4. Stativ nach einem der Ansprüche 1 bis 3, dadurch gekennzeichnet, dass die Federvorrichtung eine Spiralfeder ist.

5. Stativ nach Anspruch 3, dadurch gekennzeichnet, dass die Federvorrichtung eine zylindrische Schraubenfeder (18) mit Schenkeln ist, wobei ein Schenkel an der Seiltrommel (17) und der andere Schenkel an der Justiervorrichtung (15) eingespannt ist.

6. Stativ nach Anspruch 4 oder 5, dadurch gekennzeichnet, dass die Federvorrichtung in einem Gehäuse (19) angeordnet ist, welches an einem Ende eine Verzahnung (20) aufweist, und dass die Justiervorrichtung (15) ein mit einer korrespondierenden Verzahnung (21) versehener Federteller (22) ist, welcher mittels einer Stellvorrichtung (23) zum Justieren der Federvorrichtung in verschiedenen Positionen auf die Verzahnung am Gehäuse anpressbar ist.

7. Stativ nach einem der Ansprüche 3 bis 6, dadurch gekennzeichnet, dass die Seiltrommel (17) mit einer auskuppelbaren Antriebsvorrichtung (24) zum motorischen Verschieben der Haltevorrichtung (10) bei gelöster Arretierung (14) verbunden ist.

8. Stativ nach einem der Ansprüche 3 bis 7, dadurch gekennzeichnet, dass zum Arretieren der Haltevorrichtung eine Zahnstange (25) parallel neben der Stativstange (3) angeordnet ist, und dass die Haltevorrichtung (10) eine in die Zahnstange einrastbare Sperrklinke (26) aufweist.

9. Stativ nach Anspruch 8, dadurch gekennzeichnet, dass als Verdrehsicherung parallel neben der Stativstange (3) ein Führungsprofil (27) angeordnet ist, an dem sich die Haltevorrichtung (10) gegen Drehmomente um die Achse der Stativstange abstützt.

10. Stativ nach Anspruch 9, dadurch gekennzeichnet, dass die Haltevorrichtung einen Mantel (28) aufweist, welcher Stativstange (3), Zahnstange (25) und Führungsprofil (27) umschliesst, und dass an der Unterkante (29) des Mantels ein mit der Grundplate (2) verbundener Faltenbalg (30) angeordnet ist.

11. Stativ nach einem der Ansprüche 8 bis 10, dadurch gekennzeichnet, dass die Sperrklinke (26) an der Haltevorrichtung (10) mit einer Schaltvorrichtung (32) verbunden ist, welche die Antriebsvorrichtung (24) an der Seiltrommel (17) bei eingerasteter Klinke ausschaltet.

12. Stativ nach Anspruch 11, dadurch gekennzeichnet, dass die Sperrklinke (26) mit einem an einem Handgriff (34) befestigten Entriegelungshebel (39) ausrastbar ist, und dass der Entriegelungshebel mit einer Klappe (41) feststellbar ist, welche beim Anfassen des Entriegelungshebels ausschwenkt und welche derart mit einer Schaltvorrichtung verbunden ist, dass bei ausgeschwenkter Klappe die Antriebsvorrichtung (24) ausgekuppelt ist.

13. Stativ nach Anspruch 12, dadurch gekennzeichnet, dass die Antriebsvorrichtung an der Seiltrommel ein Elektromotor ist, welcher mit der Seiltrommel derart gekuppelt ist, dass bei Stromausfall die Seiltrommel frei drehbar ist.

14. Stativ nach Anspruch 13, dadurch gekennzeichnet, dass zwischen Mantel und Grundplatte ein justierbarer Positionsschalter (33) angeordnet ist, der beim Erreichen einer unteren und/oder oberen Endlage des Mantels bzw. der Haltevorrichtung die Antriebsvorrichtung an der Seiltrommel wahlweise ausschaltet oder deren Drehrichtung umkehrt.

15. Stativ nach einem der vorangehenden Ansprüche, dadurch gekennzeichnet, dass die Haltevorrichtung um eine quer zur Stativstange verlaufende Achse verschwenkbar ist.

## Claims

1. A stand which is adjustable in height, in particular for rotary evaporators, comprising a base plate (2) and a holding means (10) for fixing a glass assembly (4) and a drive unit or the like, the holding means being displaceable along a substantially vertical supprot bar (3) and being capable of being locked thereto by an arresting means (14), wherein the holding means is connected to a mechanical energy storage means in such a way that when the arresting means is released it can be displaced downwardly against the force of the energy storage means and can be raised with the support of the force of the energy storage means, characterised in that the energy storage means is a spring means which is arranged beside the support bar (3) and which is connected to the holding means by way of a pull cable (16).

2. A stand according to Claim 1, characterised in that the spring means has an adjusting device (15) for adjusting the potential energy which can be stored.

3. A stand according to Claim 1 or Claim 2, characterised in that the spring means is force-lockingly connected to a cable drum (17) for winding on the cable.

4. A stand according to one of Claims 1 to 3, characterised in that the spring means is a spiral spring.

5. A stand according to Claim 3, characterised in that the spring means is a cylindrical coil spring (18) having limb portions, wherein one limb portion is fixed to the cable drum (17) and the other limb portion is fixed to the adjusting device (15).

6. A stand according to Claim 4 or Claim 5, characterised in that the spring means is disposed in a housing (19) which has a tooth arrangement (20) at one end, and that the adjusting device (15) is a spring plate (22) which is provided with a corresponding tooth arrangement (21) and which can be pressed against the tooth arrangement on the housing in different postiions by means of a setting device (23) for adjusting the spring means.

7. A stand according to one of Claims 3 to 6, characterised in that the cable drum is connected to a disconnectible drive means (24) for motorised displacement of the holding means (10) when the arresting means (14) is released.

8. A stand according to one of Claims 3 to 7, characterised in that the purposes of arresting the holding means, a toothed rack (25) is arranged parallel beside the support bar (3) and that the holding means (10) has a locking pawl (26) engageable into the toothed rack.

9. A stand according to Claim 8, characterised in that a shaped guide member (27) is arranged parallel beside the support bar (3), as a rotation-preventing means, the holding means (10) bearing against the guide member (27) to resist rotary moments about the axis of the support bar.

10. A stand according to Claim 9, characterised in that the holding means has a casing (28) which encloses the support bar (3), the toothed rack (25) and the guide member (27), and that a bellows (30) which is connected to the base plate (2) is arranged at the bottom edge (29) of the casing.

11. A stand according to one of Claims 8 to 10, characterised in that the locking pawl (26) on the holding means (10) is connected to a switch means (32) which switches off the drive means (24) at the cable drum (17) when the pawl is in the engaged condition.

12. A stand according to Claim 11, characterised in that the locking pawl (26) can be disengaged with an unlocking lever (39) fixed to a handle (34), and that the unlocking lever can be fixed with a flap (41) which pivots away when the unlocking lever is gripped and which is so connected to a switch means that when the flap is pivoted away, the drive means (24) is disconnected.

13. A stand according to Claim 12, characterised in that the drive means on the cable drum is an electric motor which is so coupled to the cable drum that the cable drum is freely rotatable in the event of power failure.

14. A stand according to Claim 13, characterised in that arranged between the casing and the base plate is an adjustable position switch (33) which, when a lower and/or upper limit position of the casing or the holding means is reached, selectively switches off the drive means at the cable drum or reverses the direction of rotation thereof.

15. A stand according to one of the preceding claims, characterised in that the holding means is pivotable about an axis extending transversely with respect to the support bar.

**Revendications**

1. Statif réglable en hauteur, notamment pour un évaporateur rotatif, comportant une plaque de base (2) et un dispositif de maintien (10) déplaçable le long d'une tige approximativement verticale (3) du statif et pouvant être immobilisé sur celle-ci au moyen d'un dispositif d'arrêt (14), en vue de la fixation d'un ensemble en verre (4) et d'un mécanisme d'entraînement ou analogue, le dispositif de maintien étant relié à un accumulateur d'énergie mécanique de telle sorte que, lorsque le dispositif d'arrêt est relâché, il peut être déplacé vers le bas à l'encontre de la force de l'accumulateur d'énergie ou peut être relevé en étant assisté par la force de l'accumulateur d'énergie, caractérisé en ce que l'accumulateur d'énergie est un dispositif à ressort qui est disposé à côté de la tige (3) du statif et est relié, par l'intermédiaire d'un câble (16), au dispositif de maintien.

2. Statif selon la revendication 1, caractérisé en ce que le dispositif à ressort comporte un dispositif d'ajustement (15) permettant de régler l'énergie potentielle accumulable.

3. Statif selon la revendication 1 ou 2, caractérisé en ce que le dispositif à ressort est relié, par une liaison dynamique, à un tambour enrouleur (17) sur lequel le câble s'enroule.

4. Statif selon l'une des revendications 1 à 3, caractérisé en ce que le dispositif à ressort est un ressort spiral.

5. Statif selon la revendication 3, caractérisé en ce que le dispositif à ressort est un ressort hélicoïdal cylindrique (18) comportant des branches, l'une des branches étant tendue sur le tambour enrouleur (17) et l'autre branche étant tendue sur le dispositif d'ajustement (15).

6. Statif selon la revendication 4 ou 5, caractérisé en ce que le dispositif à ressort est disposé dans un boîtier (19) qui comporte, sur une extrémité, une denture (20), et en ce que le dispositif d'ajustement (15) est une coupelle de ressort (22) munie d'une denture correspondante (21) et qui peut être repoussée, au moyen d'un dispositif de réglage (23), contre la denture située sur le boîtier, pour réaliser les différents réglages de position du dispositif à ressort.

7. Statif selon l'une des revendications 3 à 6, caractérisé en ce que le tambour enrouleur (17) est relié à un dispositif d'entraînement (24) qui peut être désaccouplé et qui sert à réaliser le déplacement motorisé de maintien (10) lorsque le dispositif d'arrêt (14) est relâché.

8. Statif selon l'une des revendications 3 à 7, caractérisé en ce que pour l'arrêt du dispositif de maintien, une crémaillère (25) est disposée parallèlement à la tige (3) du statif, à côté de cette dernière, et en ce que le dispositif de maintien (10) comporte un cliquet de blocage (26) pouvant s'encliqueter dans la crémaillère.

9. Statif selon la revendication 8, caractérisé en ce qu'un profilé de guidage (27), sur lequel le dispositif de maintien (10) prend appui pour résister aux couples de rotation autour de l'axe de la tige du statif, est disposé parallèlement à la tige (3) du statif et à côté de cette dernière, pour jouer le rôle d'un dispositif d'immobilisation en rotation.

10. Statif selon la revendication 9, caractérisé en ce que le dispositif de maintien comporte une enveloppe (28) qui entoure la tige (3) du statif, la crémaillère (25) et le profilé de guidage (27), et en ce qu'un soufflet (30), relié à la plaque de base (2), est disposé sur le bord inférieur (29) de l'enveloppe.

11. Statif selon l'une des revendications 8 à 10, caractérisé en ce que le cliquet de blocage (26), situé sur le dispositif de maintien (10), est relié à un dispositif de commutation (32) qui met hors circuit le dispositif d'entraînement (24) monté sur le tambour enrouleur (17), lorsque le cliquet est encliqueté.

12. Statif selon la revendication 11, caractérisé en ce que le cliquet de blocage (26) peut être désencliqueté à l'aide d'un levier de déverrouillage (39) fixé sur une manette (34), et en ce que le levier de déverrouillage peut être bloqué à l'aide d'une languette (41) qui se libère par pivotement lorsque le levier de déverrouillage est saisi et qui est reliée à un dispositif de commutation de telle sorte que, lorsque la languette est libérée par pivotement, le dispositif d'entraînement (24) soit désaccouplé.

13. Statif selon la revendication 12, caractérisé en ce que le dispositif d'entraînement monté sur le tambour enrouleur est un moteur électrique qui est accouplé au tambour enrouleur de telle sorte que, dans le cas d'une coupure de courant, le tambour enrouleur puisse tourner librement.

14. Statif selon la revendication 13, caractérisé en ce qu'entre l'enveloppe et la plaque de base, est disposé un commutateur ajustable de sélection de positions (33), qui sélectivement met hors service le dispositif d'entraînement monté sur le tambour enrouleur ou inverse son sens de rotation, lorsque l'enveloppe ou le dispositif de maintien a atteint une position de fin de course inférieure et/ou supérieure.

15. Statif selon l'une des revendications précédentes, caractérisé en ce que le dispositif de maintien peut pivoter autour d'un axe s'étendant transversalement à la tige du statif.

Fig. 1

0 149 972

0 149 972

Fig. 2

Fig. 3

Fig. 4

3

28

36

35

27

29

30

2

Fig. 5

0 149 972

Fig. 5a

32

42

26    43

Fig. 6

44

27

48

F

F

Fig. 7

Fig. 8